# EUROPÄISCHE PATENTSCHRIFT

(11) **EP 3 159 214 B1**
(45) Veröffentlichungstag und Bekanntmachung des Hinweises auf die Patenterteilung: **26.05.2021**
(21) Anmeldenummer: 16194365.9
(22) Anmeldetag: 18.10.2016
(51) Int. Cl.: B60Q 1/14, G01M 11/06

(54) **VERFAHREN ZUM BETREIBEN EINES SCHEINWERFERS EINES KRAFTFAHRZEUGS**
METHOD FOR OPERATING A HEADLIGHT ON A MOTOR VEHICLE
PROCÉDÉ DE FONCTIONNEMENT D'UN PHARE D'UN VÉHICULE AUTOMOBILE

(30) Priorität: 21.10.2015 DE 102015013600
(43) Veröffentlichungstag der Anmeldung: 26.04.2017
(73) Patentinhaber: AUDI AG, 85045 Ingolstadt (DE)
(72) Erfinder: Barmeyer, Florenz, 02763 Zittau (DE); Funk, Christian, 92339 Beilngries (DE); Armbruster, Tilman, 85055 Ingolstadt (DE); Omerbegovic, Said, 65933 Frankfurt (DE)

(56) Entgegenhaltungen:
- EP-A1- 2 045 591
- WO-A1-2017/158044
- DE-A1- 19 704 427
- DE-A1-102010 029 149
- FR-A1- 3 019 266
- JP-A- 2013 002 969

## Beschreibung

Die Erfindung betrifft ein Verfahren zum Betreiben wenigstens eines Scheinwerfers eines Kraftfahrzeugs gemäß dem Oberbegriff des Anspruchs 1. Weiterhin betrifft die Erfindung einen Scheinwerfer gemäß dem Oberbegriff von Patentanspruch 10.

Aus der DE 10 2013 020 549 A1 ist eine Vorrichtung zum Erzeugen von Lichtverteilung bekannt, welche eine Leuchteinheit und eine variable Blendenvorrichtung aufweist. Die Leuchteinheit weist dabei ein Lichtquellenarray mit individuell ansteuerbaren Lichtquellen auf. Dabei kann die Blendenvorrichtung individuell ansteuerbare Blendenzellen aufweisen. Diese Blendenzellen können beispielsweise ansteuerbare Pixel eines Flüssigkristallelements sein. Dadurch kann mittels der Vorrichtung eine variabel einstellbare Lichtverteilung mit einer besonders hohen Auflösung erzeugt werden. Ferner offenbart die DE 10 2010 029 149 A1 ein Verfahren und ein Steuergerät zum Plausibilisieren eines Leuchtweite-Testwerts eines Lichtkegels eines Fahrzeugscheinwerfers. Weiterhin offenbart die FR 3 019 266 A1 ein Beleuchtungssystem für Fahrzeuge mit einer automatischen Regelung.

Bei Scheinwerfern mit sehr hoher Auflösung ist es besonders aufwändig, deren hoch aufgelöste Lichtverteilung variabel einzustellen. Bei der oben genannten Vorrichtung muss beispielsweise die Ansteuerung für jedes Pixel des Flüssigkristallelements getrennt berechnet werden.

Aufgabe der vorliegenden Erfindung ist es, ein Verfahren zum Betreiben eines Scheinwerfers eines Kraftfahrzeugs zu schaffen, welches besonders aufwandsarm ist. Weiterhin ist es Aufgabe der Erfindung, einen Scheinwerfer der oben genannten Art zu schaffen, welcher besonders aufwandsarm zu betreiben ist.

Erfindungsgemäß werden diese Aufgaben durch ein Verfahren mit den Merkmalen des Patentanspruchs 1 und einen Scheinwerfer mit den Merkmalen des Patentanspruchs 10 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen des Scheinwerfers und umgekehrt anzusehen sind.

Ein erster Aspekt der Erfindung betrifft ein Verfahren zum Betreiben wenigstens eines Scheinwerfers eines Kraftfahrzeugs, mittels welchem eine durch eine Steuereinrichtung des Scheinwerfers variabel einstellbare Lichtverteilung in einem Umgebungsbereich des Kraftfahrzeugs erzeugbar ist. Das Verfahren umfasst dabei wenigstens die im Folgenden beschriebenen Schritte: An wenigstens zwei Stützstellen der Lichtverteilung wird wenigstens eine Eigenschaft der Lichtverteilung vorgegeben. An weiteren Stellen der Lichtverteilung wird die wenigstens eine Eigenschaft in Abhängigkeit von der vorgegebenen Eigenschaft der Lichtverteilung an den wenigstens zwei Stützstellen bestimmt. Wenigstens eine Ablenkeinrichtung des Scheinwerfers und/oder wenigstens eine Lichtquelle des Scheinwerfers wird mittels der Steuereinrichtung in Abhängigkeit von der vorgegebenen und bestimmten Eigenschaft an den jeweiligen Stellen der Lichtverteilung zum Erzeugen der einstellbaren Lichtverteilung gesteuert.

Dieses Verfahren ist besonders aufwandsarm, da die Eigenschaften der Lichtverteilung nur an wenigen Stützstellen vorgegeben werden müssen und die Eigenschaften der übrigen Lichtverteilung an den weiteren Stellen in besonders einfacher Art und Weise in Abhängigkeit von dieser Vorgabe bestimmt werden. Das heißt, die Lichtverteilung an den weiteren Stellen kann einfach in Abhängigkeit von lediglich wenigstens zwei Stützstellen berechnet werden. Damit kann auch die Steuereinrichtung besonders einfach und wenig leistungsfähig sein, wodurch der Scheinwerfer besonders kostengünstig ist. Eine benötigte Datenrate kann durch die Reduktion der benötigten Informationen besonders klein sein.

Die Lichtverteilung kann beispielsweise als Abstrahlverhalten des Scheinwerfers und/oder als eine Projektion des abgestrahlten Lichts auf eine definierte Fläche verstanden werden. Die Stellen der Lichtverteilung können dabei als Koordinaten auf dieser definierten Fläche, in dem Umgebungsbereich und/oder als Position in der Lichtverteilung verstanden werden. Das Bestimmen der wenigstens einen Eigenschaft der Lichtverteilung an den weiteren Stellen der Lichtverteilung in Abhängigkeit von der vorgegebenen Eigenschaft der Lichtverteilung an den zwei Stützstellen kann beispielsweise mittels einer Recheneinheit des Scheinwerfers erfolgen. Diese Recheneinheit kann Teil der Steuereinrichtung sein.

Die Ablenkeinrichtung kann beispielsweise als einzelner verschwenkbarer Spiegel ausgebildet sein oder als ein Array von einer Vielzahl von Mikrospiegel. Das Array von Mikrospiegeln kann auch als Digital Micromirror Device, kurz DMD, bezeichnet werden. Der Scheinwerfer kann eine einzelne oder auch mehrere Lichtquellen umfassen, welche einzeln angesteuert werden können. Als Lichtquelle kann beispielsweise ein Laser und/oder eine LED genutzt werden.

Vorzugsweise kann mittels des Scheinwerfers eine variabel einstellbare Lichtverteilung mit einer Auflösung von 10.000 Pixeln oder mehr erzeugt werden. Eine solche Auflösung ist wesentlich höher als beispielsweise bei einem Scheinwerfer mit einer Vielzahl von Leuchtdiodenelementen, welche einzeln ansteuerbar sind. Ein solcher Scheinwerfer mit einer Vielzahl von Leuchtdiodenelementen kann beispielsweise 25 einzeln ansteuerbare LEDs umfassen, wodurch mit einem solchen Scheinwerfer beispielsweise eine Lichtverteilung mit einer Auflösung von 25 Pixeln erzeugt werden kann. Das Verfahren wird dagegen vorzugsweise bei Scheinwerfern genutzt, welche eine Auflösung ähnlich zu oder höher zu einem sogenannten Beamer haben.

Es ist vorgesehen, dass die Eigenschaft der Lichtverteilung an den weiteren Stellen durch eine Interpolation und/oder Extrapolation der wenigsten einen vorgegebenen Eigenschaft der Lichtverteilung an den jeweiligen Stützstellen berechnet wird. Die Interpolation und/oder Extrapolation kann beispielsweise mittels einer linearen Interpolation, einem Polynom 2. Grades, einem Polynom 3. Grades und/oder einem Polynom höheren Grades erfolgen. Die Interpolation kann dabei auch stückweise erfolgen. Eine solche Interpolation und/oder Extrapolation kann besonders aufwandsarm durchgeführt werden. Insbesondere ist eine Interpolation und/oder Extrapolation aus Stützstellen weniger rechenintensiv als eine direkte Bestimmung der Eigenschaft der Lichtverteilung an jeder Stelle.

Beispielsweise kann eine Stützstelle nahe dem Kraftfahrzeug einen geringen Helligkeitswert aufweisen und eine Stützstelle weiter weg von dem Kraftfahrzeug einen besonders hohen Helligkeitswert. Die jeweiligen Helligkeitswerte aller weiteren Stellen zwischen den zwei Stützstellen werden dann durch eine lineare Interpolation zwischen diesen zwei Stützstellen bestimmt. Weitere Stellen, welche noch näher an dem Kraftfahrzeug als die nahe Stützstelle sind und weitere Stellen, welche noch weiter von dem Kraftfahrzeug entfernt sind als die weiter entfernte Stützstelle, werden dann durch eine lineare Extrapolation bestimmt. Damit kann beispielsweise besonders aufwandsarm eine Lichtverteilung erzeugt werden, welche mit steigender Entfernung zu dem Kraftfahrzeug an Helligkeit zunimmt.

In weiterer vorteilhafter Ausgestaltung des erfindungsgemäßen Verfahrens ist es vorgesehen, dass die Stützstellen in Abhängigkeit von einer mittels einer Sensoreinrichtung des Scheinwerfers erfassten Umgebungsinformation und/oder in Abhängigkeit von einer mittels einer Bedieneinrichtung des Scheinwerfers erfassten Bedienung vorgegeben werden. Beispielsweise kann die Umgebungsinformation andere Verkehrsteilnehmer betreffen. Dann kann besonders aufwandsarm eine Lichtverteilung bestimmt werden, bei welcher andere Verkehrsteilnehmer nicht geblendet werden. Mittels der erfassten Bedienung kann der Scheinwerfer und dessen Lichtverteilung manuell eingestellt werden. Beispielsweise kann besonders aufwandsarm die Lichtverteilung bestimmt werden in Abhängigkeit davon, ob ein Abblendlicht oder ein Fernlicht eingestellt wurde. Außerdem kann so besonders aufwandsarm eine Funktionalität einer Lichthupe bereitgestellt werden.

In weiterer vorteilhafter Ausgestaltung des erfindungsgemäßen Verfahrens ist es vorgesehen, dass als die Eigenschaft der Lichtverteilung ein Helligkeitswert und/oder ein Farbwert vorgegeben wird. Der Helligkeitswert kann dabei auch als Intensität der Lichtverteilung an den jeweiligen Stellen bezeichnet werden. Der Helligkeitswert ist besonders wichtig für die Ansteuerung der Ablenkeinrichtung des Scheinwerfers und/oder der wenigstens eine Lichtquelle des Scheinwerfers. Der Farbwert kann auch als Spektralverlauf der Lichtverteilung an den jeweiligen Stellen und/oder als spektrale Zusammensetzung des Lichts der Lichtverteilung an den jeweiligen Stellen bezeichnet werden. Falls als Eigenschaft der Lichtverteilung der Helligkeitswert vorgegeben und/oder bestimmt wird, kann die Lichtverteilung besonders aufwandsarm variabel in verschiedenen Bereichen unterschiedlich stark gedimmt werden. Mittels des Farbwerts als Eigenschaft kann besonders aufwandsarm eine zusätzliche Information in dem Umgebungsbereich des Kraftfahrzeugs mittels der Lichtverteilung eingeblendet werden. Beispielsweise kann der Scheinwerfer so auch die Funktionalität eines Blinkers haben.

In weiterer vorteilhafter Ausgestaltung des erfindungsgemäßen Verfahrens ist es vorgesehen, dass die Eigenschaft der Lichtverteilung an wenigstens drei Stützstellen der Lichtverteilung vorgegeben wird, aus den wenigstens drei Stützstellen wenigstens zwei Kennlinien bestimmt werden, welche die wenigstens drei Stützstellen umfassen, und die Eigenschaft der Lichtverteilung an den weiteren Stellen der Lichtverteilung in Abhängigkeit von diesen wenigstens zwei Kennlinien bestimmt wird. Beispielsweise wird die Eigenschaft der Lichtverteilung an wenigstens drei Stützstellen der Lichtverteilung vorgegeben und die Eigenschaft an den weiteren Stellen der Lichtverteilung bestimmt, indem aus den wenigstens drei Stützstellen wenigstens zwei jeweils auf mindestens zwei der drei Stützstellen liegenden Kennlinie bestimmt werden. Handelt es sich bei der Eigenschaft der Lichtverteilung um den Helligkeitswert, können diese Kennlinien beispielsweise als Dimmkennlinien bezeichnet werden. Die zwei Kennlinien teilen sich dabei auf die drei Stützstellen auf. Das heißt, eine Kennlinie wird aus wenigstens zwei Stützstellen gebildet und eine weitere Kennlinie aus wenigstens einer dieser Stützstellen und einer weiteren der drei Stützstellen. Alternativ können die Kennlinien auch keine gemeinsame Stützstelle haben. Dann sind wenigstens vier Stützstellen für zwei Kennlinien notwendig, also zwei Stützstellen pro Kennlinie.

So lässt sich besonders aufwandsarm eine ungleichmäßig und/oder unsymmetrisch eingestellte Lichtverteilung erzeugen. Beispielsweise kann so ein Teil der Lichtverteilung in einem Teilbereich gedimmt werden, um dort einen Fahrer eines entgegenkommenden Kraftfahrzeugs nicht zu blenden. Dabei muss jedoch nicht gleichzeitig ein anderer, dazu symmetrischer Teilbereich der Lichtverteilung ebenfalls gedimmt werden. Das heißt bei dem Beispiel, dass beispielsweise ein Bürgersteig neben der Straße mit gleichem Abstand zum Scheinwerfer wie das entgegenkommende Kraftfahrzeug weiter voll ausgeleuchtet werden kann. Die Kennlinien und/oder deren Berechnungen können dabei in Abhängigkeit von mittels der Sensoreinrichtung des Scheinwerfers erfassten Umgebungsinformation und/oder in Abhängigkeit von der mittels der Bedieneinrichtung des Scheinwerfers erfassten Bedienung vorgegeben werden.

Die Eigenschaft der Lichtverteilung an den weiteren Stellen kann beispielsweise in Abhängigkeit von einer Überlagerung der Kennlinien bestimmt werden. Die zwei Kennlinien können dabei beispielsweise als eine Art von Vektoren verstanden werden, mittels welchen die Eigenschaft der Lichtverteilung an den weiteren Stellen bestimmt werden kann. Beispielsweise können jeweilige Dimmkennwerte der Kennlinien miteinander multipliziert werden, um die Dimmkennwerte an den weiteren Stellen zu bestimmen. Vorzugsweise sind die Kennlinien orthogonal zueinander ausgerichtet, um eine besonders einfache Berechnung der jeweiligen Eigenschaft der weiteren Stellen zu ermöglichen.

Wie bereits erläutert, ist es in weiterer vorteilhafter Ausgestaltung des erfindungsgemäßen Verfahrens also vorgesehen, die Eigenschaft von denjenigen Stellen der Lichtverteilung, welche außerhalb der Kennlinien liegen, mittels Interpolation und/oder Extrapolation basierend auf den wenigstens zwei Kennlinien berechnet wird.

In weiterer vorteilhafter Ausgestaltung des erfindungsgemäßen Verfahrens ist es vorgesehen, dass sich eine der beiden Kennlinien bei einer Projektion der Lichtverteilung auf einer zu einer Hauptabstrahlrichtung des Scheinwerfers angeordneten Projektionsfläche im Wesentlichen horizontal erstreckt und die andere der beiden Kennlinien im Wesentlichen vertikal erstreckt. Dabei können auch mehr als zwei Kennlinien verwendet werden. Beispielsweise können auch zwei vertikale Kennlinien und eine horizontale Kennlinie vorgesehen sein. Aufgrund der gleichmäßigen Ausrichtung der Kennlinien kann die variabel einstellbare Lichtverteilung besonders aufwandsarm bestimmt werden.

In weiterer vorteilhafter Ausgestaltung des erfindungsgemäßen Verfahrens ist es vorgesehen, dass bei der Bestimmung der Eigenschaft der Lichtverteilung an den weiteren Stellen und/oder bei der Bestimmung der Kennlinien wenigstens eine vorgegebene Hell-Dunkel-Grenze, ein maximaler Helligkeitswert, ein minimaler Helligkeitswert, ein vorgegebener Farbwert und/oder ein vorgegebener Farbbereich bezüglich der Lichtverteilung als Randbedingung berücksichtigt wird. Dadurch können insbesondere gesetzliche Bestimmungen besonders aufwandsarm berücksichtigt werden. Außerdem kann so die Eigenschaft der Lichtverteilung an den weiteren Stellen besonders einfach bestimmt werden, insbesondere mittels einer Extrapolation und/oder Interpolation, da jeweilige Grenzen bei dieser Bestimmung nicht in der Berechnung direkt mit berücksichtigt werden müssen. Bei der Hell-Dunkel-Grenze kann es sich beispielsweise um eine Art von Begrenzungspolygon handeln. Mittels der Hell-Dunkel-Grenze kann abgebildet werden, bis wohin überhaupt mittels der Lichtverteilung ausgeleuchtet werden darf.

In weiterer vorteilhafter Ausgestaltung des erfindungsgemäßen Verfahrens ist es vorgesehen, dass mittels des Verfahrens wenigstens zwei Scheinwerfer eines Kraftfahrzeugs betrieben werden, wobei die Eigenschaft der Lichtverteilung getrennt für jeden Scheinwerfer oder für beide Scheinwerfer gemeinsam bestimmt wird. Bei der getrennten Bestimmung der Eigenschaft der Lichtverteilung jedes Scheinwerfers kann ein Ausfall eines der Scheinwerfer besonders einfach kompensiert werden. Bei der gemeinsamen Bestimmung der Eigenschaft der Lichtverteilung für beiden Scheinwerfer ist das Verfahren besonders aufwandsarm.

Ein zweiter Aspekt der Erfindung betrifft einen Scheinwerfer für ein Kraftfahrzeug, mittels welchem eine durch eine Steuereinrichtung des Scheinwerfers variabel einstellbare Lichtverteilung in einem Umgebungsbereich des Kraftfahrzeugs erzeugbar ist. Erfindungsgemäß ist es dabei vorgesehen, dass die Steuereinrichtung des Scheinwerfers dazu ausgebildet ist, ein Verfahren gemäß dem ersten Erfindungsaspekt durchzuführen. Die sich aus dem Verfahren gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

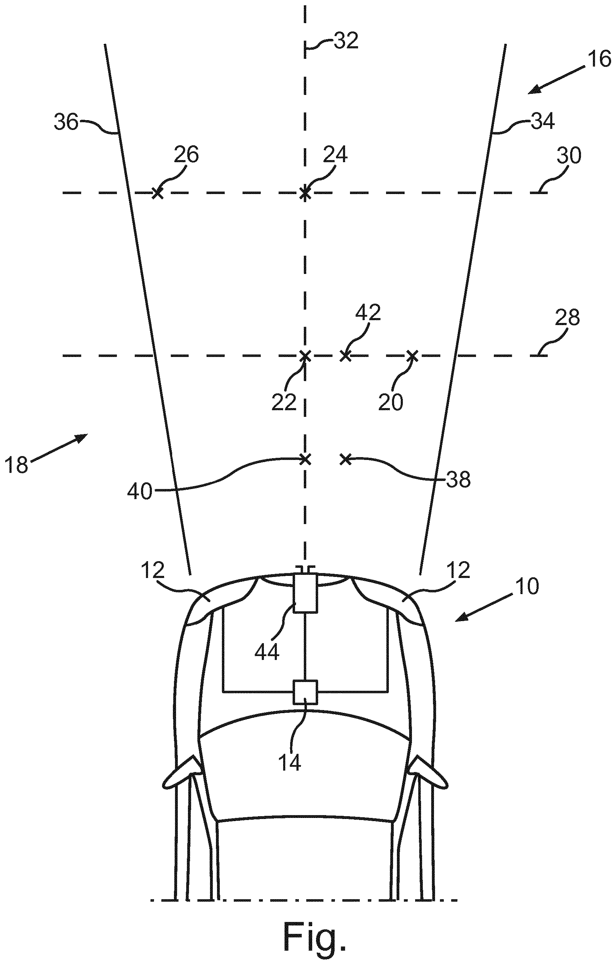

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die einzige Figur zeigt in einer schematischen Draufsicht ein Kraftfahrzeug mit Scheinwerfern zum Erzeugen einer variablen Lichtverteilung.

Die Figur zeigt in einer schematischen Draufsicht ein Kraftfahrzeug 10 mit zwei Scheinwerfern 12. Mittels der Scheinwerfer 12 ist eine durch eine Steuereinrichtung 14 der Scheinwerfer 12 variabel einstellbare Lichtverteilung 16 in einem Umgebungsbereich 18 des Kraftfahrzeugs 10 erzeugbar beziehungsweise abstrahlbar.

Zum Einstellen der Lichtverteilung 16 wird als Eigenschaft der Lichtverteilung 16 an den Stützstellen 20, 22, 24 und 26 ein Helligkeitswert der Lichtverteilung 16 vorgegeben. Alternativ oder zusätzlich kann auch ein Farbwert der Lichtverteilung 16 an diesen Stellen vorgegeben werden. Die Eigenschaft der Lichtverteilung 16, also der Helligkeitswert und/oder der Farbwert, an weiteren Stellen der Lichtverteilung 16 wird in Abhängigkeit von der vorgegebenen Eigenschaft der Lichtverteilung 16 an den Stützstellen 20, 22, 24, 26 bestimmt. Diese Bestimmung kann beispielsweise mittels einer Recheneinheit der Steuereinrichtung 14 erfolgen. Jeweils eine Ablenkeinrichtung der Scheinwerfer 12 und/oder wenigstens eine Lichtquelle der Scheinwerfer 12 wird mittels der Steuereinrichtung 14 in Abhängigkeit von den Eigenschaften der Lichtverteilung 16 an den verschiedenen Stellen zum Erzeugen der einstellbaren Lichtverteilung 16 gesteuert. Das heißt, die Scheinwerfer 12 werden nicht nur in Abhängigkeit von den Stützstellen 20 bis 26 gesteuert, sondern auch in Abhängigkeit von der Eigenschaft der Lichtverteilung 16, wie sie in Abhängigkeit von den Stützstellen 20 bis 26 bestimmt wurden.

Die Scheinwerfer 12 sind dabei dazu ausgelegt, eine Lichtverteilung 16 mit einer Auflösung von 10.000 Pixeln oder mehr zu erzeugen. Dabei ist die Lichtverteilung 16 ähnlich zu einer Lichtverteilung von einem Beamer weitestgehend frei als Bild einstellbar. Ein Beamer erfordert dabei jedoch, dass die Einstellung der einzelnen Pixel mit einer Bildwiederholungsrate des Beamers berechnet und übertragen wird, um beispielsweise ein Video abspielen zu können. Dafür sind aufwändige Berechnungen notwendig, welche beispielsweise leistungsstarke Grafikkarten in Computern zum Ansteuern des Beamers erfordern. Ebenso sind dabei besonders leistungsfähige Bussysteme zum Übertragen jeweiliger Steuerbefehle an den Beamer zum Einstellen der Pixel notwendig.

Durch das hier beschriebene Verfahren ist eine solche aufwändige Berechnung nicht notwendig. Die Berechnung der Lichtverteilung 16 ergibt sich in einfachster Weise aus den vorgegebenen Stützstellen 20 bis 26. Damit können die Scheinwerfer 12 besonders aufwandsarm betrieben werden und die Steuereinrichtung 14 und/oder die Recheneinheit, welche Teil der Steuereinrichtung 14 sein kann, besonders kostengünstig sein. Auch das Datenvolumen zur Steuerung des Scheinwerfers 12 kann so besonders klein sein, wodurch auf den Einsatz besonders leistungsfähiger Bussysteme zur Datenübertragung verzichtet werden kann.

Die Stützstellen 20, 22, 24, 26 werden beispielsweise in Abhängigkeit von Umgebungsinformationen, welche mittels einer Sensoreinrichtung 44 erfasst wurden, vorgegeben. Dadurch kann die Lichtverteilung 16 adaptiv an beispielsweise weitere Verkehrsteilnehmer angepasst werden, um eine Blendung dieser Verkehrsteilnehmer zu vermeiden. Alternativ oder zusätzlich können die Stützstellen 20, 22, 24, 26 auch in Abhängigkeit von einer mittels einer Bedieneinrichtung des Scheinwerfers 12 erfassten Bedienung vorgegeben werden. Dadurch kann bei den Scheinwerfern 12 besonders einfach zwischen verschiedene Lichtverteilung, beispielsweise einer Abblendlichtverteilung und einer Fernlichtverteilung, umgeschaltet werden, ohne dass dies spezielle Berechnungsverfahren und/oder weitere Steuerkomponenten benötigt.

Die Bestimmung der Lichtverteilung 16 erfolgt dabei beispielhaft wie folgt: Mittels der Stützstellen 20, 22, 24, 26 werden zwei horizontale Kennlinien 28 und 30 und eine vertikale Kennlinie 32 bestimmt. Die horizontale Kennlinie 28 wird durch eine lineare Interpolation und Extrapolation der Stützstellen 20 und 22 berechnet. Wenn die Stützstellen 20, 22 bestimmte Helligkeitswerte der Lichtverteilung 16 vorgeben, wird die Kennlinie 28 auch als Dimmkennlinie bezeichnet. Die horizontale Kennlinie 30 wird mittels Interpolation und Extrapolation der Stützstellen 24 und 26 bestimmt, die vertikale Kennlinie 32 mittels der Stützstellen 20 und 22. Die Kennlinien 28, 30, 32 enthalten dabei jeweils eine Information zu der Eigenschaft jeder Stelle auf der Kennlinie, also zum Beispiel den jeweiligen Helligkeitswert. Alternativ oder zusätzlich kann die Formel auch in Abhängigkeit von einer mittels einer Bedieneinrichtung des Scheinwerfers 12 erfassten Bedienung vorgegeben werden oder immer die gleiche Formel genutzt werden.

Dabei ist es auch möglich, die Interpolation und Extrapolation mit Polynomen höheren Grades zu bestimmen. Auch eine stückweise beziehungsweise bereichsweise Interpolation und Extrapolation ist möglich. Auch ist es möglich, noch mehr oder weniger Stützstellen vorzusehen. Bei mehr Stützstellen steigt der Bestimmungsaufwand, dafür ist die Lichtverteilung 16 präziser einstellbar. Bei weniger Stützstellen ist der Effekt umgekehrt. Eine Formel, welche zur Interpolation und/oder Extrapolation genutzt wird, kann dabei in Abhängigkeit von den Umgebungsinformationen, welche mittels einer Sensoreinrichtung 44 erfasst wurden, vorgegeben werden.

Die Eigenschaft der weiteren Stellen der Lichtverteilung 16 außerhalb der Kennlinien 28, 30 und 32 und/oder außerhalb der Stützstellen 20, 22, 24, 26 wird dann beispielsweise einfach durch Kombination der Stützstellen 20, 22, 24, 26 und/oder Kombination der Kennlinien 28, 30, 32 bestimmt. Beispielsweise wird die weitere Stelle 38 beziehungsweise die Eigenschaft der Lichtverteilung 16 an der weiteren Stelle 38 mittels einer Multiplikation der Eigenschaft an der Stelle 40 auf der Kennlinie 32 und der Stelle 42 auf der Kennlinie 28 bestimmt. Die beiden Kennlinien 28 und 32 bilden also quasi Vektoren in dem Umgebungsbereich 18, über dessen Koordination die Eigenschaft der Lichtverteilung 16 anhand dieser Vektoren bestimmt werden können. Lässt sich beispielsweise aus der Kennlinie 32 entnehmen, dass an der Stelle 40 die Lichtverteilung 16 einen Dimmkennwert von 80 Prozent der maximalen Helligkeit aufweisen sollte und an der Stelle 42 aus der Kennlinie 28, dass die Lichtverteilung 16 dort einen Helligkeitswert von 70 Prozent aufweisen sollte, kann hieraus für die weitere Stelle 38 beispielsweise ein Dimmkennwert von 75 Prozent bestimmt werden. Eine solche Bestimmung ist besonders aufwandsarm und erfordert nur geringe Berechnungskapazitäten in der Steuereinrichtung 14.

Dabei wird die Lichtverteilung 16 durch die zwei Hell-Dunkel-Grenzen 34 und 36 begrenzt. Die Hell-Dunkel-Grenzen 34, 36 sind als Begrenzungspolynome ebenfalls bei der Berechnung hinterlegt. Außerhalb der Hell-Dunkel-Grenzen 34, 36 entspricht beispielsweise ein Helligkeitswert der Kennlinien 28 und 30 immer einer Helligkeit von Null. Dadurch kann die Lichtverteilung 16 einfach begrenzt werden und/oder besonders einfach gesetzliche Vorschriften eingehalten werden.

Die Ansteuerung der Scheinwerfer 12 erfolgt also auf Grundlage von den Stützstellen 20, 22, 24, 26 und zugehörigen Dimmwerten als Eigenschaft der Lichtverteilung 16 sowie auf Grundlage der Begrenzung der Lichtverteilung 16 mittels der Hell-Dunkel-Grenzen 34, 36.

Jeweilige Werte jeweiliger Pixel der Lichtverteilung 16 berechnen sich aus einer Überlagerung der horizontalen Kennlinien 28, 30 und der vertikalen Dimmkennlinie 32. Die jeweiligen Kennlinien 28, 30, 32, welche beispielsweise als Dimmkennlinien ausgebildet sind, bestehen aus einer Anzahl an Stützstellen, insbesondere Stützstellen 20, 22, 24, 26 und zugehörigen Dimmwerten. Werte zwischen den Stützstellen 20, 22, 24, 26 werden interpoliert. Durch multiplikative Überlagerung der Kennlinien 28, 30, 32 lässt sich eine Vielzahl an Lichtverteilungen 16 relativ zur Laufzeit realisieren.

Zusätzlich kann die Lichtverteilung 16 durch Polygonzüge, die aus Stützstellen und der Verbindung dieser Stützstellen, welche auch aus Polynomen höheren Grades bestehen können, beliebig begrenzt werden. Dadurch ist eine flexible Ansteuerung der Lichtverteilung 16 hochauflösender Scheinwerfersysteme mittels aktueller Bussysteme und/oder Steuerungseinheiten realisierbar.

## Patentansprüche

1. Verfahren zum Betreiben wenigstens eines Scheinwerfers (12) eines Kraftfahrzeugs (16) mit sehr hoher Auflösung, mittels welchem eine durch eine Steuereinrichtung (14) des Scheinwerfers variabel einstellbare Lichtverteilung (16) in einem Umgebungsbereich (18) des Kraftfahrzeugs (10) erzeugt wird, um eine hoch aufgelöste Lichtverteilung variabel einzustellen, wobei die Steuereinrichtung wenigstens die Schritte durchführt:
- Vorgeben von wenigstens einer Eigenschaft der Lichtverteilung (16) an wenigstens zwei Stützstellen (20, 22, 24, 26) der Lichtverteilung (16); und
- Bestimmen der wenigstens einen Eigenschaft der Lichtverteilung (16) an weiteren Stellen (38) der Lichtverteilung (16) in Abhängigkeit von der vorgegebenen Eigenschaft der Lichtverteilung (16) an den wenigstens zwei Stützstellen (20, 22, 24, 26);
**gekennzeichnet durch**
- Steuern wenigstens einer Ablenkeinrichtung des Scheinwerfers (12) und/oder Steuern wenigstens einer Lichtquelle des Scheinwerfers (12) mittels der Steuereinrichtung (14) in Abhängigkeit von der vorgegeben und bestimmten Eigenschaft der Lichtverteilung (16) an den jeweiligen Stellen (20, 22, 24, 26, 38) zum Erzeugen der einstellbaren Lichtverteilung (16), indem die Eigenschaft der Lichtverteilung (16) an den weiteren Stellen (38) durch eine Interpolation und/oder Extrapolation der wenigsten einen vorgegebenen Eigenschaft der Lichtverteilung (16) an den jeweiligen Stützstellen (20, 22, 24, 26) berechnet wird.

2. Verfahren nach Anspruch 1,
**dadurch gekennzeichnet, dass**
als die Eigenschaft der Lichtverteilung (16) ein Helligkeitswert und/oder ein Farbwert vorgegeben wird.

3. Verfahren nach einem der vorhergehenden Ansprüche,
**dadurch gekennzeichnet, dass**
die Eigenschaft der Lichtverteilung (16) an wenigstens drei Stützstellen (20, 22, 24, 26) der Lichtverteilung (16) vorgegeben wird, aus den wenigstens drei Stützstellen (20, 22, 24, 26) wenigstens zwei Kennlinien (28, 30, 32) bestimmt werden, welche die wenigstens drei Stützstellen (20, 22, 24, 26) umfassen, und die Eigenschaft der Lichtverteilung (16) an den weiteren Stellen (38) der Lichtverteilung (16) in Abhängigkeit von diesen wenigstens zwei Kennlinien (28, 30, 32) bestimmt wird.

4. Verfahren nach Anspruch 3,
**dadurch gekennzeichnet, dass**
die Eigenschaft von denjenigen Stellen (38) der Lichtverteilung, welche außerhalb der Kennlinien (28, 30, 32) liegen, mittels Interpolation und/oder Extrapolation basierend auf den wenigstens zwei Kennlinien (28, 30, 32) berechnet wird.

5. Verfahren nach einem der Ansprüche 3 oder 4,
**dadurch gekennzeichnet, dass**
sich eine der beiden Kennlinien (28, 30) bei einer Projektion der Lichtverteilung (16) auf einer zu einer Hauptabstrahlrichtung des Scheinwerfers (12) angeordneten Projektionsfläche im Wesentlichen horizontal erstreckt und die andere der Kennlinien (32) im Wesentlichen vertikal erstreckt.

6. Verfahren nach einem der vorhergehenden Ansprüche,
**dadurch gekennzeichnet, dass**
bei der Bestimmung der Eigenschaft der Lichtverteilung (16) an den weiteren Stellen (38) und/oder bei der Bestimmung der Kennlinien (28, 30, 32) wenigstens eine vorgegebene Hell-Dunkel-Grenze (34, 36), ein maximaler Helligkeitswert, ein minimaler Helligkeitswert, ein vorgegebener Farbwert und/oder ein vorgegebener Farbbereich bezüglich der Lichtverteilung (16) als Randbedingung berücksichtigt wird.

7. Verfahren nach einem der vorhergehenden Ansprüche,
**dadurch gekennzeichnet, dass**
mittels des Verfahrens wenigstens zwei Scheinwerfer (12) des Kraftfahrzeugs (10) betrieben werden, wobei die Eigenschaft der Lichtverteilung (16) getrennt für jeden Scheinwerfer (12) oder für beide Scheinwerfer (12) gemeinsam bestimmt wird.

8. Scheinwerfer (12) für ein Kraftfahrzeug (10), mittels welchem eine durch eine Steuereinrichtung (14) des Scheinwerfers (12) variabel einstellbare Lichtverteilung (16) in einem Umgebungsbereich (18) des Kraftfahrzeugs (10) erzeugbar ist, wobei der Scheinwerfer (12) eine Lichtquelle und/oder eine Ablenkeinrichtung umfasst, **dadurch gekennzeichnet, dass**
die Steuereinrichtung (14) des Scheinwerfers (12) dazu ausgebildet ist, ein Verfahren nach einem der vorhergehenden Ansprüche durchzuführen.

## Claims

1. Method for operating at least one headlight (12) on a motor vehicle (16) with very high resolution, by means of which a light distribution (16) which can be variably set by a control device (14) of the headlamp is produced in a surrounding region (18) of the motor vehicle (10) in order to variably set a high-resolution light distribution, the control device carrying out at least the following steps:
- specifying at least one property of the light distribution (16) at at least two sampling points (20, 22, 24, 26) of the light distribution (16);
- determining the at least one property of the light distribution (16) at further points (38) of the light distribution (16) as a function of the specified property of the light distribution (16) at the at least two sampling points (20, 22, 24, 26);
**characterised by**
- controlling at least one deflection device of the headlight (12) and/or controlling at least one light source of the headlight (12) by means of the control device (14) as a function of the specified and determined property of the light distribution (16) at the respective points (20, 22, 24, 26, 38) for producing the adjustable light distribution (16), the property of the light distribution (16) at the further points (38) being calculated by an interpolation and/or extrapolation of the least one specified property of the light distribution (16) at the respective sampling points (20, 22, 24, 26).

2. Method according to claim 1,
**characterised in that**
a brightness value and/or a colour value is specified as the property of the light distribution (16).

3. Method according to any one of the preceding claims,
the property of the light distribution (16) is specified at at least three sampling points (20, 22, 24, 26) of the light distribution (16), at least two characteristic curves (28, 30, 32) which include the at least three sampling points (20, 22, 24, 26) are determined from the at least three sampling points (20, 22, 24, 26), and the property of the light distribution (16) at the further points (38) of the light distribution (16) is determined as a function of these at least two characteristic curves (28, 30, 32).

4. Method according to claim 3,
**characterised in that**
the property of those points (38) of the light distribution which lie outside the characteristic curves (28, 30, 32) is calculated by means of interpolation and/or extrapolation based on the at least two characteristic curves (28, 30, 32).

5. Method according to any one of claims 3 or 4,
**characterised in that**
one of the two characteristic curves (28, 30) extends substantially horizontally and the other of the characteristic curves (32) extends substantially vertically when the light distribution (16) is projected onto a projection surface arranged relative to a main beam direction of the headlight (12).

6. Method according to any one of the preceding claims,
**characterised in that**
in the determination of the property of the light distribution (16) at the further points (38) and/or in the determination of the characteristic curves (28, 30, 32), at least one specified light/dark boundary (34, 36), a maximum brightness value, a minimum brightness value, a specified colour value and/or a specified colour range with respect to the light distribution (16) is taken into account as a boundary condition.

7. Method according to any one of the preceding claims,
**characterised in that**
at least two headlights (12) of the motor vehicle (10) are operated by means of the method, the property of the light distribution (16) being determined separately for each headlight (12) or for both headlights (12) together.

8. Headlight (12) for a motor vehicle (10), by means of which a light distribution (16) which can be variably adjusted by a control device (14) of the headlight (12) can be produced in a surrounding region (18) of the motor vehicle (10), the headlight (12) comprising a light source and/or a deflecting device,
**characterised in that**
the control device (14) of the headlight (12) is configured to carry out a method according to any one of the preceding claims.

## Revendications

1. Procédé de fonctionnement d'au moins un phare (12) d'un véhicule automobile (16) à très haute résolution, au moyen duquel une répartition lumineuse réglable de manière variable est produite par un dispositif de commande (14) du phare dans une zone environnante (18) du véhicule automobile (10), pour régler de manière variable une répartition lumineuse à haute résolution, le dispositif de commande réalisant au moins les étapes consistant à :
- fixer au moins une propriété de la répartition lumineuse (16) au niveau d'au moins deux points d'appui (20, 22, 24, 26) de la répartition lumineuse (16) ; et
- déterminer l'au moins une propriété de la répartition lumineuse (16) au niveau d'autres points (38) de la répartition lumineuse (16) en fonction de la propriété prédéfinie de la répartition lumineuse (16) au niveau des au moins deux points d'appui (20, 22, 24, 26) ;
**caractérisé par**
- la commande d'au moins un déflecteur du phare (12) et/ou la commande d'au moins une source lumineuse du phare (12) au moyen du dispositif de commande (14) en fonction de la propriété prédéfinie et déterminée de la répartition lumineuse (16) au niveau des points respectifs (20, 22, 24, 26, 38) pour produire la répartition lumineuse (16) réglable, en calculant la propriété de la répartition lumineuse (16) au niveau des autres points (38) par une interpolation et/ou une extrapolation de l'au moins une propriété prédéfinie de la répartition lumineuse (16) au niveau des points d'appui (20, 22, 24, 26) respectifs.

2. Procédé selon la revendication 1,
**caractérisé en ce que**
en tant que propriété de la répartition lumineuse (16), une valeur de luminosité et/ou une valeur de couleur est prédéfinie.

3. Procédé selon l'une quelconque des revendications précédentes,
**caractérisé en ce que**
la propriété de la répartition lumineuse (16) est prédéfinie au niveau d'au moins trois points d'appui (20, 22, 24, 26) de la répartition lumineuse (16), à partir des au moins trois points d'appui (20, 22, 24, 26) au moins deux courbes caractéristiques (28, 30, 32) sont déterminées, lesquelles comprennent les au moins trois points d'appui (20, 22, 24, 26), et la propriété de la répartition lumineuse (16) est déterminée au niveau des autres points (38) de la répartition lumineuse (16) en fonction desdites au moins deux courbes caractéristiques (28, 30, 32).

4. Procédé selon la revendication 3,
**caractérisé en ce que**
la propriété de ces points (38) de la répartition lumineuse, qui se situent en dehors des courbes caractéristiques (28, 30, 32) est calculée au moyen d'une interpolation et/ou d'une extrapolation sur la base des au moins deux courbes caractéristiques (28, 30, 32).

5. Procédé selon l'une quelconque des revendications 3 ou 4,
**caractérisé en ce que**
l'une des deux courbes caractéristiques (28, 30) s'étend sensiblement horizontalement lors d'une projection de la répartition lumineuse (16) sur une surface de projection disposée par rapport à une direction principale de rayonnement du phare (12) et l'autre des courbes caractéristiques (32) s'étend sensiblement verticalement.

6. Procédé selon l'une quelconque des revendications précédentes,
**caractérisé en ce que**
lors de la détermination de la propriété de la répartition lumineuse (16) au niveau des autres points (38) et/ou lors de la détermination des courbes caractéristiques (28, 30, 32), au moins un seuil entre lumière et obscurité prédéfini (34, 36), une valeur de luminosité maximale, une valeur de luminosité minimale, une valeur de couleur prédéfinie et/ou une plage de couleurs prédéfinie relative à la répartition lumineuse (16) est considérée comme condition limite.

7. Procédé selon l'une quelconque des revendications précédentes,
**caractérisé en ce que**
au moyen du procédé au moins deux phares (12) du véhicule automobile (10) fonctionnent, la propriété de la répartition lumineuse (16) séparée pour chaque phare (12) ou pour les deux phares (12) étant déterminée conjointement.

8. Phare (12) destiné à un véhicule automobile (10), au moyen duquel une répartition lumineuse (16) réglable de manière variable par un dispositif de commande (14) du phare (12) peut être produite dans une dans une zone environnante (18) du véhicule automobile (10), le phare (12) comprenant une source lumineuse et/ou un déflecteur,
**caractérisé en ce que**
le dispositif de commande (14) du phare (12) est conçu pour réaliser un procédé selon l'une quelconque des revendications précédentes.
